## Europäisches Patentamt
## European Patent Office
## Office européen des brevets

(11) Publication number: **0 052 422**
**B1**

(12) **EUROPEAN PATENT SPECIFICATION**

(45) Date of publication of patent specification: **25.11.87**

(51) Int. Cl.⁴: **F 24 J 3/00**

(21) Application number: **81304782.6**

(22) Date of filing: **14.10.81**

(54) **Heat exchanger.**

(30) Priority: **18.11.80 GB 8036901**

(43) Date of publication of application:
**26.05.82 Bulletin 82/21**

(45) Publication of the grant of the patent:
**25.11.87 Bulletin 87/48**

(84) Designated Contracting States:
**BE DE FR GB IT NL SE**

(56) References cited:
**EP-A-0 035 871**
**FR-A-2 455 713**
**GB-A-2 010 468**
**US-A-2 019 356**
**US-A-2 024 083**
**US-A-4 196 525**

(73) Proprietor: **Exxon Research and Engineering Company**
**P.O.Box 390 180 Park Avenue**
**Florham Park New Jersey 07932 (US)**

(72) Inventor: **Moss, Gerald Dr.**
**"Trevose" Sarajac Avenue**
**East Challow Wantage Oxfordshire (GB)**

(74) Representative: **Somers, Harold Arnold et al**
**ESSO Engineering (Europe) Ltd. Patents & Licences Apex Tower High Street**
**New Malden Surrey KT3 4DJ (GB)**

Courier Press, Leamington Spa, England.

## Description

This invention relates to heat exchangers suitable for use in systems using an adsorber as a source of heat.

US—A—4196525 is concerned with apparatus for the storage of hydrogen and the description with reference to Fig. 4 and Fig. 4a, discloses a cylindrical container for the storage of hydrogen through which 6 pipes pass longitudinally. Also there is a perforated tube inserted into the container. In the space between the pipes and tube are housed 6 porous intermetallic compound containers. US—A—4161221 concerns apparatus for providing refrigeration and the description with reference to Fig. 3 discloses a heat exchanger surrounded by and contacted by hydride.

When using an adsorber there are two problems to be overcome to ensure that the adsorption heat generator will have adequate load following characteristics. There must be free access for adsorbate vapour to contact the bulk of the adsorbent so that the heat rate limitations imposed by the vapour diffusion rates are minimised and the length of the heat transmission path through the adsorbent must be short enough to ensure that the adsorption and the heat release rates are not temperature limited.

These problems may be solved by using the heat exchanger of this invention. This comprises a continuous pipework through which liquid can pass, the pipework being supported by a structure and provided with ducts with vapour pervious walls and being connected to the structure so as to at least partially enclose or surround the pipework. There is also solid adsorbent material housed adjacent to but outside the ducts, the ducts and solid adsorbent material being located so that the ducts separate the pipework from the solid adsorbent material. The pipework and structure are made of heat conducting material, e.g. a metal such as copper or aluminium. Also vapour passing from the solid adsorbent material into the ducts is conveyed through the ducts to an outlet.

The pipework is supported on a heat conducting structure and this is preferably a sheet, strip or plate. It is convenient for the pipework to be soldered or welded onto this structure e.g. sheet. However, if desired this structure e.g. sheet may be made with expanded sections which form liquid-tight conduits therein and hence constitute the pipework. It is essential that the structure itself is also made of heat conducting material, e.g. a metal such as copper or aluminium.

The configuration of the pipework can vary, but usually it is serpentiform, whereby if a structure, e.g. sheet, is used it is substantially covered with pipework. When installed for use it is preferred that the axes of the bulk of the pipework are substantially vertical.

Spaced from and adjacent to the pipework are ducts with vapour pervious walls. These ducts which enclose at least partially the pipework can for example be perforated strips or wire mesh.

Other examples are porous plastics or metals. Preferably the ducts are made of heat conducting material, e.g. copper or aluminium.

If the supporting structure together with the pipework forms a continuous surface as in the case where the structure is a sheet or strip, then the ducts need only be attached to one surface of the structure. These ducts can conveniently be shaped so that the cross-sectional area of the vapour passage is half-cylindrical, U-shaped, rectangular or square. Together with the structure they will form a vapour pervious passageway surrounding the pipework.

These ducts can be attached to the supporting structure by for example welding, soldering or glue such as epoxy resin adhesive, etc.

Generally, substantially all the pipework has pervious ducts associated therewith. Thus, in the case of a serpentine pipework only the curved ends will not be provided with pervious ducts.

The housing of solid material adjacent to the duct can be achieved in different ways. One particularly convenient form is provided by the use of a plurality of structures in the form of sheet, strips or plates substantially parallel to each other housed in a container. The structures are placed substantially vertically in the container substantially parallel to one another and the solid material is housed between each structure and supported by the bottom of the container. Some of the solid material is of course housed between the side walls of the container and the structure immediately adjacent to the side walls of the container. In such cases, the surfaces of the structures having the pipework attached thereto, will usually but not necessarily face in the same direction.

Alternatively, separate containers could be attached to each sheet, strip or plate so that solid material can be housed adjacent to each duct.

Another form is provided by the use of a structure in the form of a spiral sheet housed in a container. This sheet is a continuous spiral, one face of which is provided with a continuous pipework surrounded by a series of pervious ducts. The space in between is used to house the solid material which is supported by the bottom of the container.

In cases where there is more than one structure then it is preferred that the pipework associated with each structure be connected in parallel, e.g. by manifolds, connected respectively to the inlet ends and to the outlet ends of each pipework.

When using a plurality of structures or using a structure in the form of a spiral sheet the spacing between adjacent structures or adjacent laps of the spiral sheet should be chosen so as to give adequate heat transfer whilst minimising the amount of heat conducting material, e.g. metal, used for the purpose.

In order to increase the temperature of liquid flowing through the pipework and also vapour passing through the ducts, it is possible to attach electrical resistance heaters (e.g. in the form of metal tube enclosing electric elements) to the supporting structure, e.g. sheet or plate. Such electrical resistance heaters which of course should be electrically insulated from the structure can be spaced at regular intervals throughout the supporting structure or if desired only at certain positions on the supporting structure.

It will be appreciated that more than one continuous pipework supported on a structure can be used in any one heat exchanger, thus enabling more than one liquid to be subjected to heat exchange. If two pipeworks are required then one convenient arrangement would be the use of a sheet or plate as the supporting structure with one face supporting one pipework and the other face supporting the other pipework.

The above described heat exchangers are particularly designed for cases where solid material containing a vapour is housed in the heat exchanger adjacent to, but external of the ducts. In such cases the vapour is driven off from the solid, passing through the pervious ducts and out through an outlet, by the heat given up by liquid circulating through the pipework.

The invention is now described with reference to the drawings in which

Fig. 1 is a perspective view part broken away of one form of heat exchanger; and

Fig. 2 is a perspective view of part of an alternative form of heat exchanger.

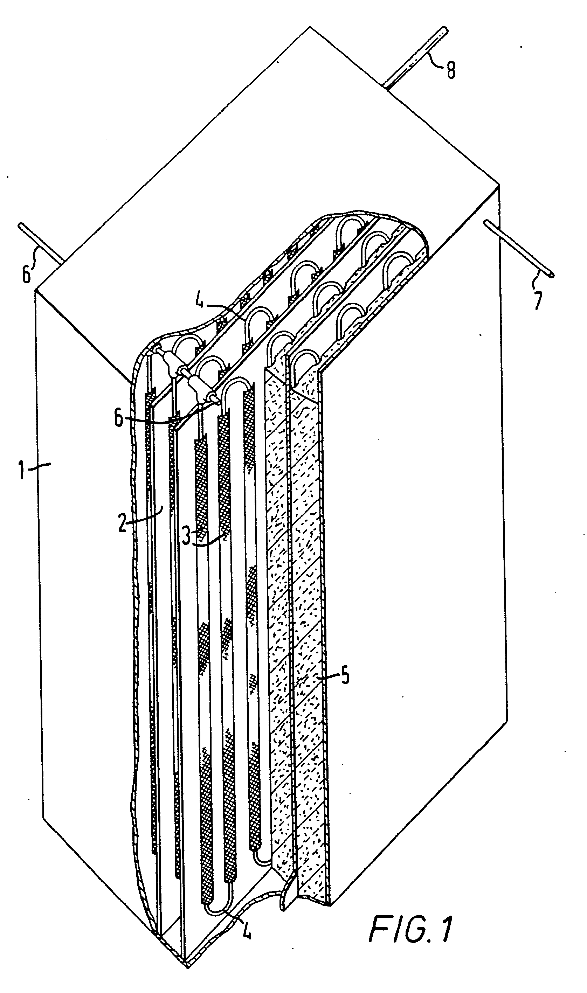

Referring to Fig. 1 the outer container houses a number of parallel sheets, one of which is shown at 2. Soldered to each of these sheets is a pipework of serpentine shape, two portions of which are shown at 4. Adjacent to the bulk of the pipework are a series of porous ducts, two of which are shown at 3. These consist of wire gauze shaped substantially as half cylinders and are fixed onto the sheets 2 so as to enclose the parallel portions of the serpentine pipework 4, but leaving a small space between the pipework and the gauze.

The ends of each pipework are connected in parallel by manifolds 6 and 7, one of which is the inlet 6 and the other the outlet 7 for liquid flowing through the pipework 4. There is an outlet for vapour at 8.

The space between each sheet 2 is filled with a solid material 5 which may for example be an adsorbent such as zeolite.

The heat exchanger operates by passing heated liquid through the inlet 6 and out of the outlet 7 wherein heat will be transferred to the solid material 5. Any vapour present therein, e.g. water vapour, will be heated and some of it will be vaporised passing through the wire gauze ducts 3 and finally leaving the container 1 through the outlet 8.

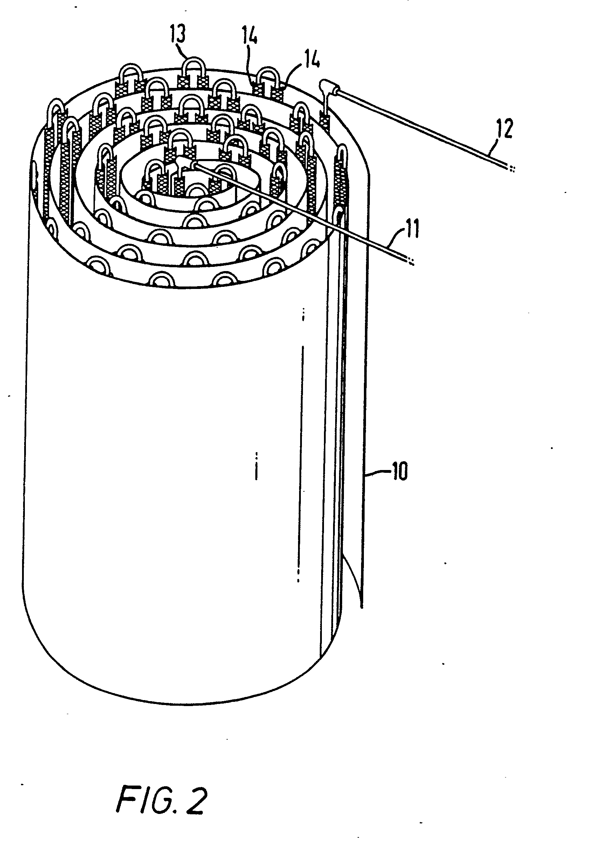

In the alternative embodiment shown in Fig. 2 the continuous serpentine pipework 13 is supported on a coiled sheet 10. There are an inlet manifold 11 and an outlet manifold 12 for the pipework 13. Adjacent to the vertical portions of the pipework 13 there are pervious ducts made of half cylinders of wire gauze, two of which are shown at 14. These ducts 14 are welded onto the coiled sheet 10 leaving half cylindrical ducts adjacent to the pipework.

In the interest of clarity the presence of solid material has been omitted but it can be readily appreciated that such material is inserted in between the coils of the sheet 10. It is supported at the bottom by the bottom wall of the outer container which also in the interest of clarity has been omitted. This outer container will preferably be of cylindrical shape and will be provided with a vapour outlet near the top. This embodiment works in an identical manner to that shown in Fig. 1.

## Claims

1. A heat exchanger comprising a pipework (4) through which liquid can pass and which is supported by a structure (2), the structure (2) and pipework (4) being made of heat conducting material, characterised in that the pipework (4) is continuous, and there are provided ducts (3) with vapour pervious walls connected to the structure which at least partially encircle or surround the pipework (4) and means capable of housing solid material (5) adjacent to but outside the ducts (3), the ducts (3) serving to separate the pipework (4) from the solid material (5).

2. A heat exchanger according to claim 1 wherein the pipework (4) is serpentiform.

3. A heat exchanger according to either of claims 1 and 2 wherein the ducts (3) are made of wire mesh or gauze.

4. A heat exchanger according to any one of the preceding claims wherein electrical resistance heaters are attached to the supporting structure (2).

5. A heat exchanger according to any one of the preceding claims wherein a plurality of sheets (2), strips or plates substantially parallel to one another on which the pipework (4) is supported are housed in a container (1) whereby said solid material (5) is housed between each sheet (2), strip or plate and the ducts (3).

## Patentansprüche

1. Wärmetauscher mit einem Rohrbündel (4), durch das Flüssigkeit fließen kann und das von einer Struktur (2) gehalten ist, wobei die Struktur (2) und das Rohrbündel (4) aus wärmeleitendem Material bestehen, dadurch gekennzeichnet, daß das Rohrbündel (4) zusammenhängend ist und daß Rohrkanäle (3) mit mit der Struktur verbundenen, flüssigkeitsdurchlässigen Wänden, welche das Rohrbündel (4) mindestens zum Teil umgeben oder einschließen, und Mittel vorgesehen sind, die zum Einschließen von Feststoff (5) benachbart zu den, jedoch außerhalb der Rohrkanäle (3) geeignet sind, wobei die Rohrkanäle (3) dazu dienen, das Rohrbündel (4) vom Feststoff (5) zu trennen.

2. Wärmetauscher nach Anspruch 1, bei welchem das Rohrbündel (4) schlangenförmig ist.

3. Wärmetauscher nach einem der Ansprüche 1 und 2, bei welchem die Rohrkanäle (3) aus Drahtgeflecht oder Gaze bestehen.

4. Wärmetauscher nach einem der vorangegangenen Ansprüche, bei welchem elektrische Widerstandsheizungen an der tragenden Struktur (2) befestigt sind.

5. Wärmetauscher nach einem der vorangegangenen Ansprüche, bei welchem mehrere Bleche (2), Streifen oder Platten, an denen das Rohrbündel (4) gehalten ist, im wesentlichen parallel zueinander in einem Behälter (1) eingeschlossen sind, wobei der Feststoff (5) zwischen jedem Blech (2), Streifen oder Platten und den Rohrkanälen (3) eingeschlossen ist.

**Revendications**

1. Un échangeur de chaleur comprenant une tuyauterie (4) à travers laquelle peut passser un liquide et qui est supportée par une structure (2), la structure (2) et la tuyauterie (4) étant réalisées en un matériau conducteur de la chaleur, caractérisé en ce que la tuyauterie (4) est continue et qu'il est prévu des conduits (3) avec des parois perméables à la vapeur reliées à la structure qui entourent ou enveloppent au moins partiellement la tuyauterie (4) et un moyen capable d'abriter une matière solide (5) adjacente mais extérieure aux conduits (3), les conduits (3) servant à séparer la tuyauterie (4) de la matière solide (5).

2. Echangeur de chaleur selon la revendication 1, dans lequel la tuyauterie (4) a la forme d'un serpentin.

3. Echangeur de chaleur selon l'une des revendications 1 ou 2 dans lequel les conduits (3) sont réalisés en toile métallique.

4. Echangeur de chaleur selon l'une quelconque des revendications précédentes dans lequel des réchauffeurs à résistance électrique sont fixés à la structure de support (2).

5. Echangeur de chaleur selon l'une quelconque des revendications précédentes, dans lequel une pluralité de tôles minces (2), de bandes ou de plaques sensiblement parallèles les unes par rapport aux autres sur lesquelles repose la tuyauterie (4) sont logées dans un récipient (1), grâce à quoi la matière solide (5) est logée entre chaque tôle mince (2), bande ou plaque et les conduits (3).

FIG.1

FIG. 2